# EUROPÄISCHE PATENTSCHRIFT

(11) **EP 1 637 450 B1**
(45) Veröffentlichungstag und Bekanntmachung des Hinweises auf die Patenterteilung: **08.06.2011**
(21) Anmeldenummer: 05020578.0
(22) Anmeldetag: 21.09.2005
(51) Int. Cl.: B64C 3/48

(54) **Flügel, insbesondere Tragflügel eines Flugzeugs, mit veränderbarem Profil**
Wing, in particular aircraft wing, with variable profile
Aile, en particulier aile d'aéronef, avec profil variable

(30) Priorität: 21.09.2004 DE 102004045651; 29.11.2004 US 631341 P
(43) Veröffentlichungstag der Anmeldung: 22.03.2006
(73) Patentinhaber: Airbus Operations GmbH, 21129 Hamburg (DE)
(72) Erfinder: Perez-Sanchez, Juan-Mauricio, 83620 Feldkirchen-Westerham (DE)
(74) Vertreter: Dilg, Andreas

(56) Entgegenhaltungen:
- EP-A- 1 205 383
- WO-A-97/44238
- DE-A1- 10 325 950
- DE-A1- 19 936 721
- US-A- 4 247 066
- US-A- 4 296 900
- "SMART WINGS ELIMINATE MECHANICAL LINKAGES" DESIGN ENGINEERING, MORGAN-GRAMPIAN LTD. LONDON, GB, 1. Juli 1995 (1995-07-01), Seiten 43-44, XP000517526 ISSN: 0308-8448

## Beschreibung

Die Erfindung betrifft einen Flügel, insbesondere einen Tragflügel eines Flugzeugs, mit veränderbarem Profil.

Herkömmlich werden zur Veränderung des Profils eines Flügels, insbesondere des Tragflügels eines Flugzeugs, dienende Steuerklappen als starre Flügelteile hergestellt. Durch diese erfolgt die Umlenkung der Strömung am Flügel aerodynamisch nicht optimal und außerdem ist die Lastverteilung nicht günstig, da die Anlenkung der Steuerklappe an einzelnen Anschlußstellten am Flügel zu verhältnismäßig großen lokalen Spannungen führt.

Die Aufgabe der Erfindung ist es, einen Flügel, insbesondere Tragflügel eines Flugzeugs, mit veränderbarem Profil zu schaffen, durch den die Wölbung des Flügels und damit dessen Profil zumindest bereichsweise verstellbar ist.

Erfindungsgemäß wird diese Aufgabe durch einen Flügel mit den Merkmalen des Anspruchs 1 gelöst.

Durch die Erfindung wird ein Flügel, insbesondere Tragflügel eines Flugzeugs, mit veränderbarem Profil, der sich in im wesentlichen in Strömungsrichtung verlaufender Flügeltiefenrichtung und quer dazu in Spannweitenrichtung erstreckt und eine erste Beplankung und eine zweite Beplankung aufweist, und mit einem flexiblen Bereich, durch den das Profil des Flügels verstellbar ist, geschaffen. Erfindungsgemäß ist es vorgesehen, daß der flexible Bereich ein oder mehrere in einer Längsrichtung ausgedehnte Wirbelelemente umfaßt, die an ihren Längsseiten in einem vorgegebenen Maß über Gelenkbereiche gelenkig verbunden und zwischen der ersten Beplankung und der zweiten Beplankung vorgesehen sind, wobei die Wirbelelemente einen quer zu ihrer Längsrichtung verlaufenden, mit der ersten Beplankung in Verbindung stehenden Übertragungsbereich und einen in Vertikalrichtung beabstandeten, mit einem Verstellmechanismus zum Bewegen der Wirbelelemente um die Gelenkbereiche gekoppelten Antriebs- oder Verstellbereich aufweisen, wobei der Verstellmechanismus ein oder mehrere Hebelelemente enthält, die zwischen den Antriebs- oder Verstellbereich der Wirbelelemente und die zweite Beplankung gekoppelt und durch ein oder mehrere Antriebselemente unter damit einhergehender gegenseitiger Verschiebung von Antriebs- oder Verstellbereich und zweiter Beplankung im Sinne einer Veränderung des Flügelprofils in Ansprache auf ein von außen zugeführtes entsprechendes Steuersignal verdrehbar oder verschwenkbar sind.

EP 1 205 383 A offenbart einen Mechanismus zur bereichsweisen Verstellung und Wölbung von Tragflügeln. Wirbel weisen ein Übertragungselement auf, welches mit einer ersten Beplankung über ein Pendelgelenk in Verbindung steht, um eine Relativbewegung zwischen einer ersten Beplankung und dem zumindest einen Wirbel auszugleichen. Ferner weisen die Wirbel eine Verbindungsstelle zu einer aufgrund eines Steuerkommandos in ihrer Länge veränderlichen Antriebssehne auf, wobei aufgrund eines Steuersignals die Länge der Antriebssehne veränderbar ist und der zumindest eine Wirbel um eine Spannweitenrichtung gedreht wird, so dass die Form von Torsionskästen und dadurch die Profilform in vorbestimmter Weise veränderlich ist.

Vorteilhafte Ausführungsformen und Weiterbildungen des erfindungsgemäßen Flügels sind in den Unteransprüchen angegeben.

Im folgenden werden Ausführungsbeispiele der Erfindung anhand der Zeichnung erläutert.

Es zeigt:
Figur 1 eine isometrische Ansicht eines Flügels gemäß einer ersten Ausführungsform der Erfindung, der einen variablen Flügelbereich an seiner Vorderkante und an seiner Hinterkante, sowie an seinem äußeren Ende aufweist;
Figur 2 einen Schnitt in Strömungs- oder Flügeltiefenrichtung durch den Flügel nach Figur 1;
Figur 3 eine Draufsicht auf den Flügel des in Figur 1 und 2 dargestellten Ausführungsbeispiels;
Figur 4 in perspektivischer Darstellung zwei verschiedene Verstellzustände eines erfindungsgemäßen Tragflügels mit hilfsweise eingezeichneten Profilsehnen;
Figur 5 einen Schnitt in Biegerichtung eines variablen oder flexiblen Flügelbereichs nach einem Ausführungsbeispiel der Erfindung, wobei der flexible Bereich durch mehrere in einer Längsrichtung ausgedehnte und zwischen einer ersten Beplankung und einer zweiten Beplankung des Flügels angeordnete Wirbelelemente gebildet ist;
Figur 6 eine schematisierte Darstellung des in Figur 5 gezeigten Flügels in gewölbter Stellung, die insbesondere der Erläuterung eines zur Veränderung des Flügelprofils vorgesehenen Verstellmechanismus dient;
Figur 7 eine vergrößerte perspektivische Ansicht, die ein Detail des genannten Verstellmechanismus zeigt;
Figur 8 eine vergrößerte Darstellung, die eine Ausführungsform einer gelenkigen Verbindung zwischen in dem flexiblen Flügelbereich enthaltenen Wirbelelementen und einer Beplankung des Tragflügels darstellt;
Figur 9 und 10 seitliche Schnittansichten von Abstandshaltern, welche die erste Beplankung und die zweite Beplankung eines Flügels unter einem vorgegebenen Abstand halten und gleichzeitig eine Relativverschiebung der beiden in einer vorgegebenen Richtung gestatten:
Figur 11 einen Schnitt in Biegerichtung durch einen veränderbaren oder flexiblen Bereich eines Flügels nach einem weiteren Ausführungsbeispiel der Erfindung, wobei der flexible Bereich durch mehrere in einer Längsrichtung ausgedehnte und zwischen einer ersten Beplankung und einer zweiten Beplankung des Flügels angeordnete Wirbelelemente gebildet ist, in gestreckter Stellung;
Figur 12 und Figur 13 jeweils einen Schnitt durch den flexiblen Flügelbereich gemäß dem in Figur 11 gezeigten Ausführungsbeispiel in einer nach unten bzw. in einer nach oben gewölbten Stellung;
Figur 14 einen vergrößerten Ausschnitt aus Figur 11 zur Erläuterung von Aufbau und Funktionsweise des flexiblen Flügelbereichs in seinen Einzelheiten;
Figur 15 einen nochmals vergrößerten Ausschnitt aus Figur 14 zur Erläuterung einer bevorzugten Art von Verbindung zwischen in dem flexiblen Flügelbereich enthaltenen Wirbelelementen und der Beplankung des Flügels;

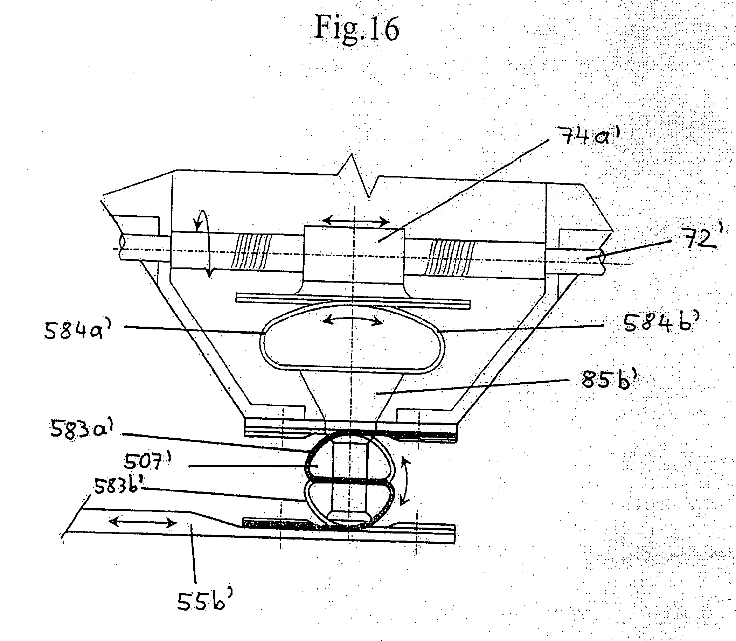

Figur 16 eine alternative Ausführungsform gemäß einem anderen Ausführungsbeispiel für den zur Verstellung des flexiblen Flügelbereichs dienenden Verstellmechanismus; und
Figur 17a) und b) einen flexiblen Flügelbereich gemäß einem weiteren Ausführungsbeispiel der Erfindung in gestreckter bzw. in gewölbter Stellung.

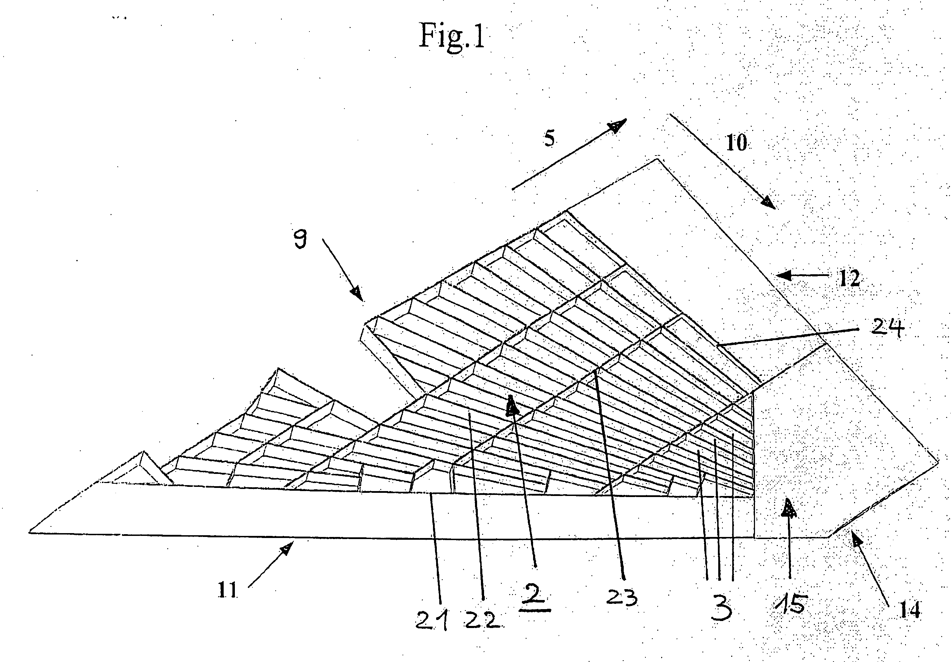

In den Figuren 1 bis 3 ist ein Tragflügel eines Flugzeugs in Form eines Delta-Flügels dargestellt, welcher mehrere formvariable oder flexible Flügelbereiche nach der Erfindung aufweist. Jedoch kann es sich bei den erfindungsgemäßen Flügel um jeglichen Flügel handeln, der zur Beeinflussung einer Strömung an einem Objekt verwendet werden kann, insbesondere kann es sich um Flügel eines Flugzeugs handeln.

Bei dem in den Figuren 1 bis 3 dargestellten Tragflügel eines Flugzeugs sind formvariable Flügelbereiche 11, 12, 15 vorgesehen, die zur Steuerung des Flugzeugs, jedoch auch zu anderen Zwecken, wie beispielsweise zur Beeinflussung der Strukturbelastung vorgesehen sein können.

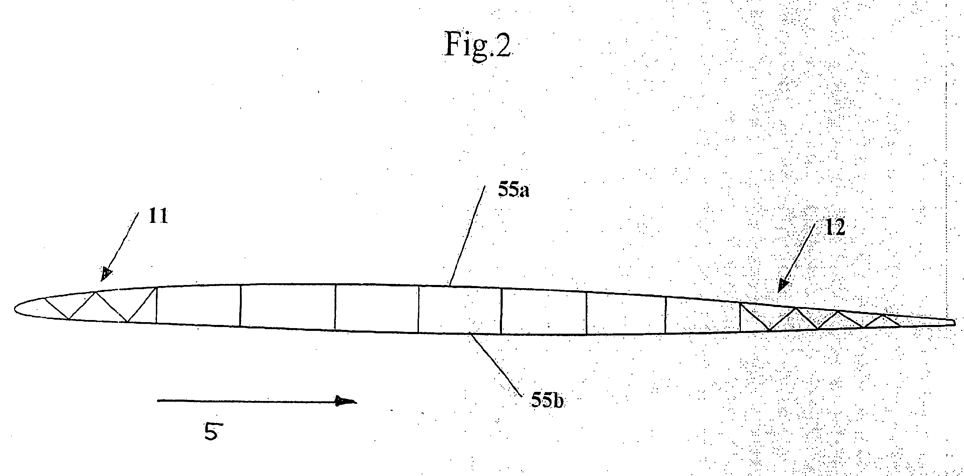

Der in Figur 1 dargestellte, insgesamt mit dem Bezugszeichen 1 gekennzeichnete Tragflügel eines Flugzeugs umfaßt einen aus zumindest einem Flügelkasten 3 gebildeten tragenden Bereich 2, der sich von einem Wurzelbereich 9 zu einem Flügelspitzenbereich 14 erstreckt. Der Flügelkasten kann mehrere Holme aufweisen, von denen Hauptholme 21, 22, 23, 24 in den Figuren 1 und 2 besonders hervorgehoben sind. Der Flügel 1 umfaßt drei verschiedene formvariable Flügelbereiche 11, 12, 15, der Flügel 1 kann jedoch auch insgesamt durch einen formvariablen Flügelbereich gebildet sein.

Wie Figur 2 zeigt, ist der Flügel 1 mit einer ersten Beplankung 55a, hier die obere Beplankung, und mit einer zweiten Beplankung 55b, hier die untere Beplankung versehen. Der mit dem Bezugszeichen 5 gekennzeichnete Pfeil zeigt die Flügeltiefenrichtung oder ungefähre Strömungsrichtung in Bezug auf den Flügel 1, wahrend der mit dem Bezugszeichen 10 versehene Pfeil die Spannweitenrichtung angibt.

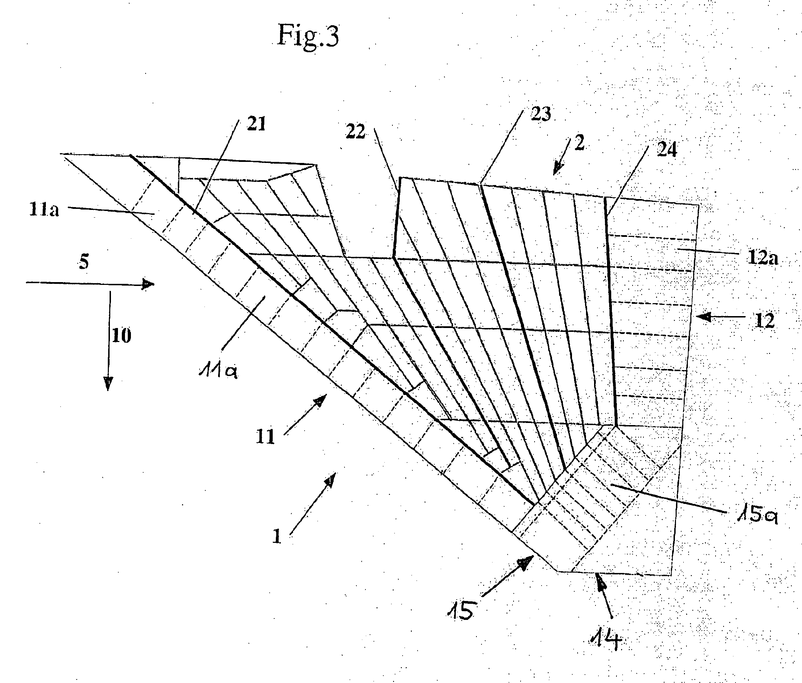

Die in den Figuren 1 bis 3 gezeigte Ausführungsform des Flügels 1 verfügt über einen einteiligen oder, wie insbesondere in Figur 3 zu sehen, in Spannweitenrichtung 10 gesehen in mehrer Segmente 11a aufgeteilten Vorderkantenbereich 11 und einen einteiligen oder; wie in Figur 3, in Spannweitenrichtung 10 gesehen in mehrere Segmente 12a aufgeteilten Hinterkantenbereich 12. Weiterhin verfügt der Flügel 1 über einen Flügelspitzen-oder Flügelendbereich 15, der einteilig oder, wie wiederum in Figur 3 gezeigt, aus mehreren Segmenten 15a gebildet sein kann. Die Erfindung ist auf den Vorderkantenbereich 11, auf den Hinterkantenbereich 12, auf den Flügelspitzen-oder Flügelendbereich 15, auf mehrere diese Bereiche oder auf den tragenden Bereich 2 des Flügels anwendbar. Der Flügel auf den die Erfindung anwendbar ist, kann auch anders als der in Figur 1 bis 3 dargestellte Flügel gestaltet sein, der verstellbare Bereich muß sich nicht, wie gezeigt, über die gesamte Flügelspannweite 10 erstrecken, sondern er kann auch nur eine sich über einen Teil erstreckende Zone des Tragflügels 1 erstrecken.

In den Figuren 1 bis 3 bildet der Vorderkantenbereich 11, der Hinterkantenbereich 12 und der Flügelspitzen-oder Flügelendbereich 15 flexible oder variable Bereiche des Tragflügels 1.

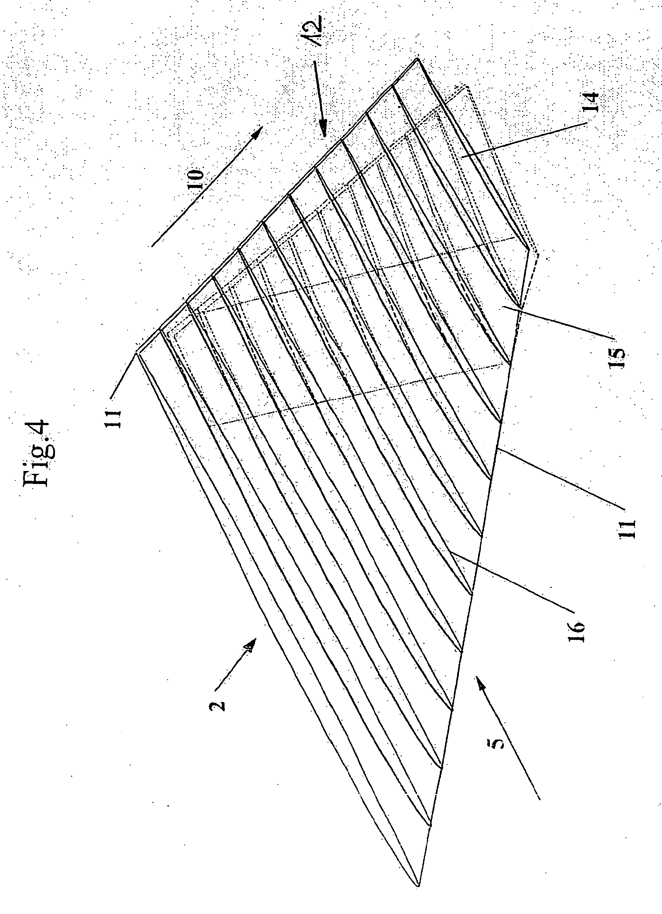

Figur 4 beispielsweise zeigt einen Tragflügel 1, bei welchem sich ein flexibler Bereich 15 diagonal und schräg über den tragenden Bereich 2 erstreckt, woraus sich die beiden mit durchgezogenen Linien bzw. mit gestrichelten Linien dargestellten Verstellzustände und alle dazwischen liegenden Verstellzustände des Flügelspitzenbereichs 14, 15 darstellen lassen. Die in Figur 4 hilfsweise eingezeichneten Profilsehnen 16 machen die Art der Veränderung des Flügelprofils deutlich.

Wie aus den Figuren 1 und 3 ersichtlich ist, ist der flexible Bereich 15, der den Flügelspitzenbereich 14 mit dem tragenden Bereich 2 des Flügels 1 verbindet, nahe dem Flügelende angeordnet und verläuft schräg zur Flügeltiefenrichtung 5 vom Vorderkantenbereich 11 zum Hinterkantenbereich 12. Durch die Verstellung des Profils des flexiblen Bereichs 15 und des Flügelspitzenbereichs 14 kann eine Steuerungs- oder Trimmfunktion erfüllt werden. Auch kann verbunden mit einer entsprechenden Steuerungs- oder Regelungseinrichtung eine Veränderung oder Minimierung der Flügelbelastung erreicht werden.

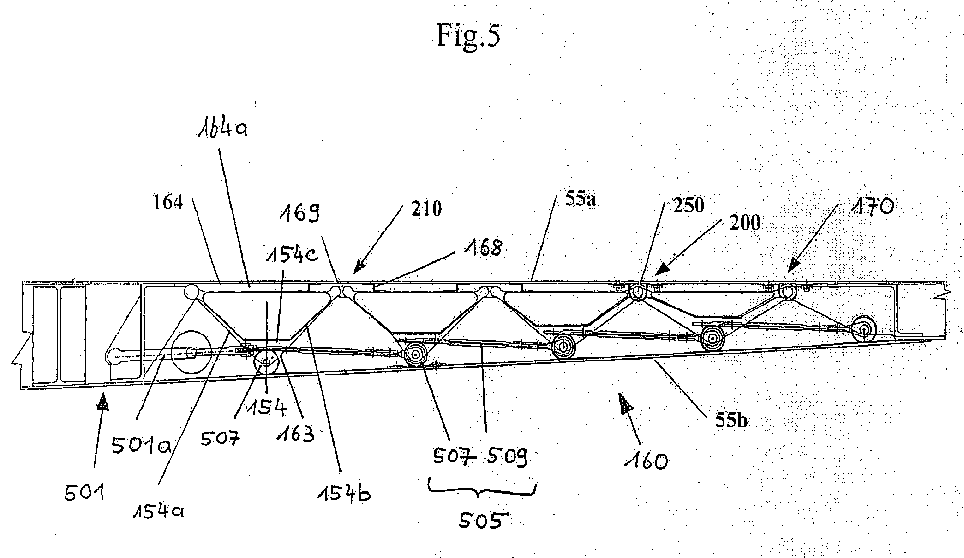

Die Figuren 5 und 6, 11 bis 14 und 17 zeigen anhand von bevorzugten Ausführungsbeispielen jeweils einen Verstellmechanismus, welcher zur Verstellung der Profilform eines formvariablen Flügelbereichs zeigt. Die in der Zeichenebene der Figuren liegende Längsrichtung X des Verstellmechanismus bzw. des formvariablen Flügelbereichs verläuft je nach Pfeilung des Flügels 1 schräg zur Flügeltiefenrichtung 5 oder parallel zu dieser. Senkrecht zu der Längsrichtung X verläuft, ebenfalls in der Zeichenebene, die Höhen- oder Vertikalrichtung Y des Verstellmechanismus.

Wie die Querschnittsansicht der Figuren 5 und 6, 11 bis 14 und 17 zeigt, umfaßt der formvariable oder flexible Flügelbereich, der beispielsweise der in den Figuren 1 und 3 gezeigte Bereich 11, 12 oder 15 sein kann, mehrere zwischen der ersten Beplankung 55a und zweiten Beplankung 55b befindliche Wirbelelemente 154; 154'; 154" die bezüglich der Längsrichtung X des formvariablen Flügelbereichs gesehen hintereinander angeordnet und durch Gelenke oder Gelenkbereiche 169, 200; 169'; 169" in einem vorgegebenen Maße gelenkig miteinander verbunden sind. Die Wirbelelemente 154; 154'; 154" können aus kastenförmigen oder ähnlich gestalteten Elementen gebildet sein. Sie können in einer, in den genannten Figuren senkrecht zur Längsrichtung X und damit senkrecht zur Zeichenebene verlaufenden Querrichtung Z ausgedehnt sein. Die in den genannten Figuren dargestellten Wirbelelemente 154; 154'; 154" haben im Querschnitt eine im wesentlichen dreieckige Grundform, sie können jedoch auch eine andersartige Grundform, z.B. eine viereckige Grundform haben.

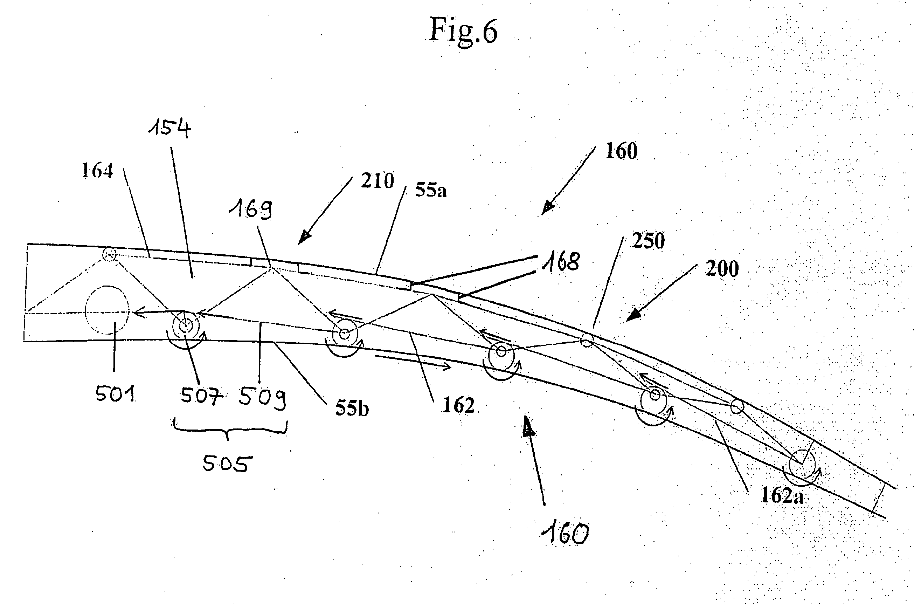

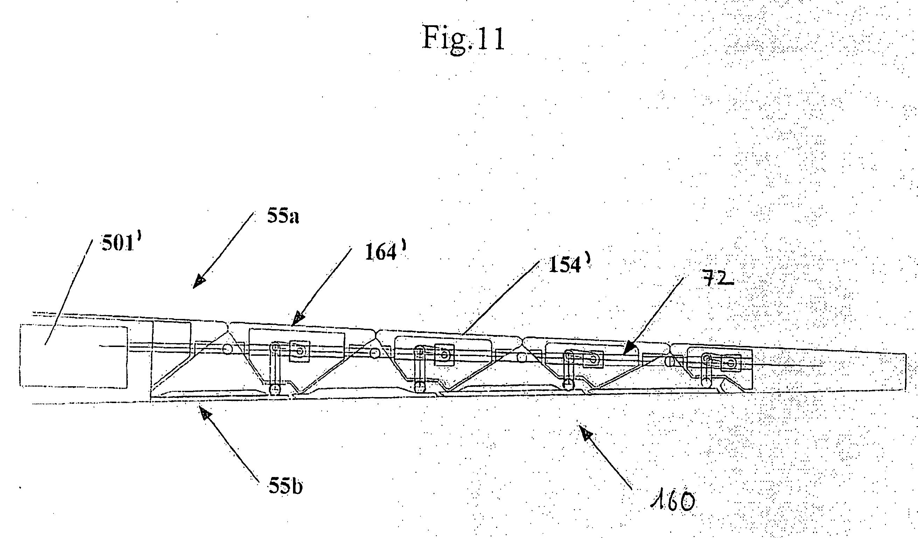

Die in den Figuren 5 und 6 gezeigten Wirbelelemente 154 weisen einen nahe der ersten Beplankung 55a gelegenen Übertragungsbereich 164 auf, der sich parallel und unter der ersten Beplankung 55a erstreckt. Alternativ kann die erste Beplankung 55a selbst aus den Übertragungsbereichen 164'; 164" der hintereinander angeordneten Wirbelelemente 154'; 154" gebildet sein, wie dies bei den Figuren 11 bis 14 und 17 dargestellten, später noch näher zu erläuternden Ausführungsbeispielen gezeigt ist. Hierbei ist die erste Beplankung 55a facettenartig aus den die Übertragungsbereiche 164'; 164" bildenden Segmenten zusammengesetzt, die in diesem Falle flächig ausgebildet sind.

Die erste Beplankung 55a kann die obere Beplankung sein, wie in den Ausführungsbeispielen dargestellt, es kann aber auch die untere Beplankung sein. Die Wirbelelemente 154 können, wie im dargestellten Fall, aus kastenförmigen oder aber auch aus stab- oder rippenförmigen oder aus andersartigen Elementen oder auch aus plattenförmigen Elementen gebildet sein.

Für die in den Figuren 5 und 6 bzw 11 bis 14 bzw. 17 dargestellten Ausführungsbeispiele gilt, daß in Höhen- oder Vertikalrichtung Y beabstandet von dem Übertragungsbereich 164; 164'; 164" ein Antriebs- oder Verstellbereich 163; 163'; 163" der Wirbelelemente 154; 154'; 154" vorgesehen ist, an welchem ein insgesamt mit dem Bezugszeichen 160; 160'; 160" versehener Verstellmechanismus zum Zwecke der Veränderung der Profilform des variablen Flügelbereichs angreift. Der Verstellmechanismus 160; 160'; 160" umfaßt Verstellelemente 505; 505'; 505" mit ein oder mehreren Hebelelementen 507; 507'; 507", die zwischen den Antriebs- oder Verstellbereich 163; 163'; 163" der Wirbelelemente 154; 154'; 154" und die zweite Beplankung 55b gekoppelt und die durch ein oder mehrere Antriebselemente 509; 509'; 509" unter damit einhergehender gegenseitiger Verschiebung von Antriebs- oder Verstellbereich 163; 163'; 163" und zweiter Beplankung 55b im Sinne einer Veränderung des Flügelprofils verdrehbar oder verschwenkbar sind, was in Ansprache auf ein von außen zugeführtes entsprechendes Steuersignal geschieht. Auf diese Weise werden die Wirbelelemente 154; 154'; 154" oder zumindest ein Teil von diesen gedreht oder geschwenkt.

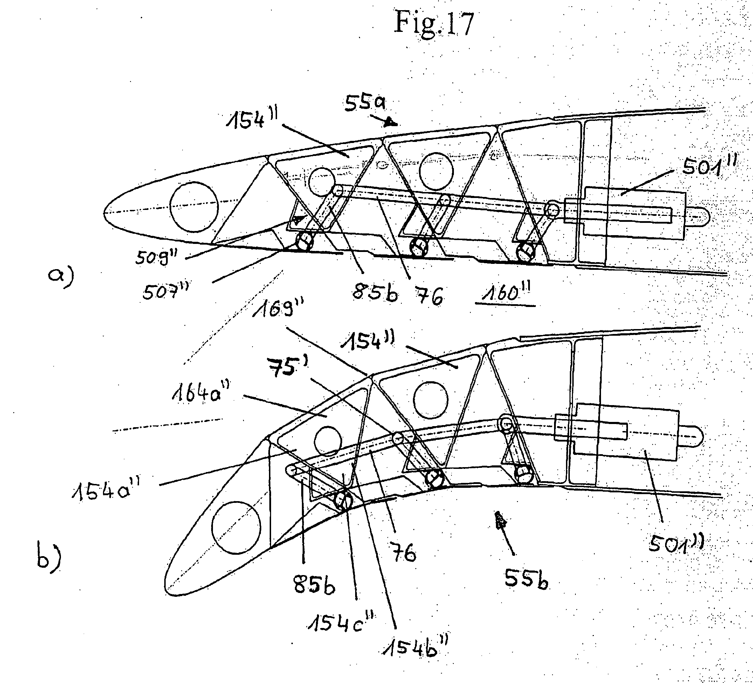

Bei den Ausführungsformen von Figur 5 und 6 bzw. von Figur 11 bis 14 bzw. Von Figur 17 weisen die Wirbelelemente 154; 154' eine dreieckige Grundform auf, wobei der Antriebs- oder Verstellbereich 163; 163' zwischen der ersten Beplankung 55a und der zweiten Beplankung 55b und nahe der letzteren gelegen ist. Alternativ kann der Antriebs- oder Verstellbereich 163 auch außerhalb des zwischen der ersten Beplankung 55a und der zweiten Beplankung 55b gelegenen Bereichs vorgesehen sein.

Bei den Ausführungsformen der Figuren 5 und 6 bzw. 11 bis 14 bzw. 17 haben die Wirbelelemente 154; 154'; 154" eine dreieckige Grundform, die durch ein kastenförmiges Element gebildet ist und ein Basiselement 164a; 164a'; 164a" aufweist, das einen Übertragungsbereich 164; 164'; 164" bildet und parallel unter der ersten Beplankung 55a verläuft, bzw. diese teilweise bildet. Von dem Basiselement 164a; 164a'; 164a" aus verlaufen ein erster Schenkel 154a; 154a'; 154a" und ein zweiter Schenkel 154b; 154b'; 154b" zu einer dem Basiselement 164a; 164a'; 164a" gegenüberliegenden Spitze 164c; 164c'; 164c" des Wirbelelements 154; 154'; 154". Die Spitzen 154c; 154c'; 154" der Wirbelelemente 154; 154'; 154" bilden einen Antriebs- oder Verstellbereich 163; 163'; 163", an den die Verstellelemente 505; 505'; 505" des Verstellmechanismus 160; 160'; 160" gekoppelt sind, die dazu dienen, die Wirbelelemente 154; 154'; 154" im Sinne einer Veränderung des Flügelprofils in Ansprache auf ein von außen zugeführtes entsprechendes Steuersignal zu verdrehen oder zu verschwenken. Die aneinander anliegenden Seiten zweier benachbarter Wirbelelemente 154; 154'; 154" sind über ein Gelenk oder einen Gelenkbereich 169; 169' miteinander verbunden.

Bei dem Ausführungsbeispiel der Figuren 5 und 6 sind die aneinander anliegenden Seiten der Wirbelelemente 154 mit der ersten Beplankung 55a über ein Strukturgelenk 250 verbunden.

Bei dem in den Figuren 5 und 6 gezeigten Ausführungsbeispiel umfassen die den Verstellmechanismus 160 bildenden Verstellelemente 505 jeweils ein Hebelelement 507 und ein Antriebselement 509. Die Hebelelemente 507 sind durch walzenförmige Elemente gebildet, die an einer Seite ihres Umfangs an einem Teil der zweiten Beplankung 55b anliegen und durch eine flexible Bandanordnung 583a, 583b im Sinne einer Rollbewegung zwischen der zweiten Beplankung 55b und dem walzenförmigen Hebelelement 507 gekoppelt sind. Mit ihrer Drehachse 508 sind die walzenförmigen Hebelelemente 507 mit dem Antriebs- oder Verstellbereich 163 gekoppelt. An der der zweiten Beplankung 55b gegenüberliegenden anderen Seite ihres Umfangs sind die Hebelelemente 507 mit dem Antriebselement 509 gekoppelt, welches durch ein stangenförmiges oder sehnenförmiges Element gebildet ist. Eine Verdrehung oder Verschwenkung der Hebelelemente 507 durch die stängenförmigen Antriebselemente 509 bewirkt eine gegenseitige Verschiebung von Verbindungsbereich 163 und zweiter Beplankung 55b im Sinne einer Veränderung des Flügelprofils, wie in Figur 6 gezeigt. Der Verstellmechanismus 160 umfaßt mehrere in Längsrichtung X hintereinander angeordnete Verstellelemente 505, die jeweils aus einem solchen Hebelelement 507 und einem damit verbundenen stangenförmigen Antriebselement 509 gebildet sind. Diese beiden Elemente können auch auf andere Weise nach dem Stand der Technik gebildet sein.

Bei dem in Figur 5 und 6 dargestellten Ausführungsbeispiel sind die stangenförmigen Antriebselemente 509 im Sinne einer Weiterleitung der Antriebsbewegung zwischen zwei aufeinanderfolgenden Wirbelelementen 154 zwischen den Verbindungsbereich 163, nämlich an der Achse 508 des Hebelelements 507, und die zweite, also der zweiten Beplankung 55b abgewandte Seite des Hebelelements 507 des vorangehenden Wirbelelements 154 gekoppelt. Das Antriebselement 509 eines in Antriebsrichtung ersten Wirbelelements 154 ist mit einer Aktuatoreinrichtung 501 gekoppelt, die bei dem dargestellten Ausführungsbeispiel zur Betätigung des gesamten Verstellmechanismus 160 vorgesehen ist und die mit der zweiten, also der der zweiten Beplankung 55b abgewandten Seite und damit auch mit dem nachfolgenden stangenförmigen Antriebselement 509 in Verbindung steht.

Die Aktuatoreinrichtung 501 ist eine solche, welche eine Schub- und Zugbewegung ausübt, die von einem Stellelement 501a der Aktuatoreinrichtung 501 auf das erste stangenförmige Antriebselement 509 und damit auf alle weiteren Antriebselemente 509 und damit auf alle Verstellelemente 505 des Verstellmechanismus 160 übertragen wird. Auf diese Weise wird die Antriebsbewegung des Stellelements 501a des Schubaktuators 501 über den gesamten veränderlichen oder flexiblen Flügelbereich übertragen, wie in Figur 6 zu sehen ist.

Alternativ können gemäß einer anderen Ausführungsform die zwischen zwei aufeinanderfolgenden Wirbelelementen 154 vorgesehenen Antriebselemente 509 durch jeweils eine eigene in ihrer Länge veränderbare Aktuatoreinrichtung gebildet sein, die in Ansprache auf ein von außen zugeführtes Steuersignal verkürzt oder verlängert wird, so daß sich jeweils eine Verstellbewegung zwischen zwei benachbarten Wirbelelementen 154 ergibt.

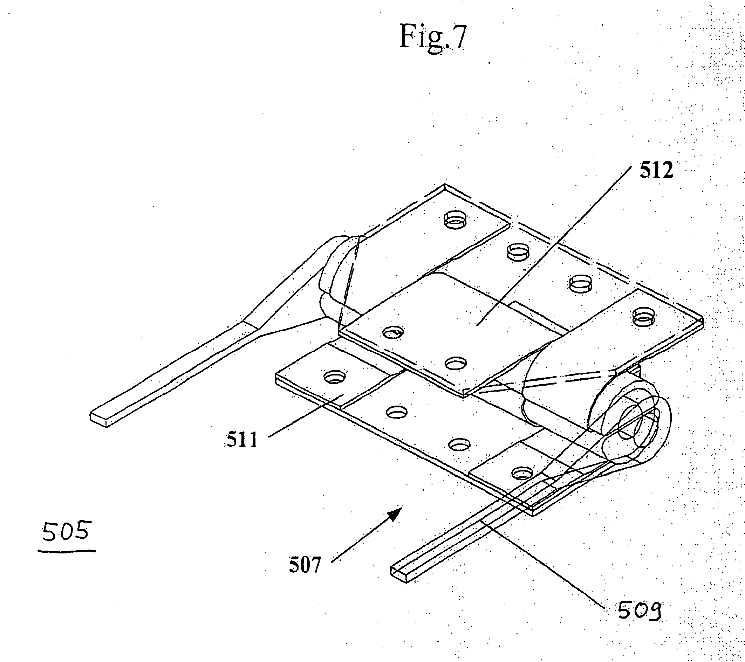

Figur 7 zeigt in einer vergrößerten perspektivischen Darstellung ein durch ein walzenförmiges Hebelelement 507 und ein stangenförmiges Antriebselement 509 gebildetes Verstellelement 505, wie es in Figur 5 und Figur 6 gezeigt ist, und das durch flexible Bandanordnungen 511, 512 mit der einen Seite an der zweiten Beplankung 55b und mit der anderen Seite an den Antriebselementen 509 festgelegt ist.

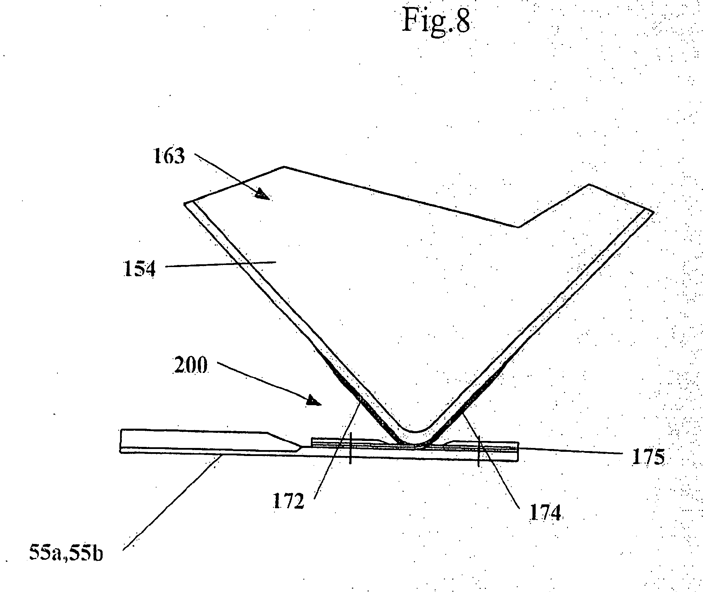

Figur 8 zeigt eine Möglichkeit, wie der Antriebs- oder Verstellbereich 163 eines Wirbelelements 154 über biegeelastische Bänder 172, 174, die zusammen ein flexibles Gelenk 200 bilden, an einer ersten oder zweiten Beplankung 55a, 55b festgelegt sein kann.

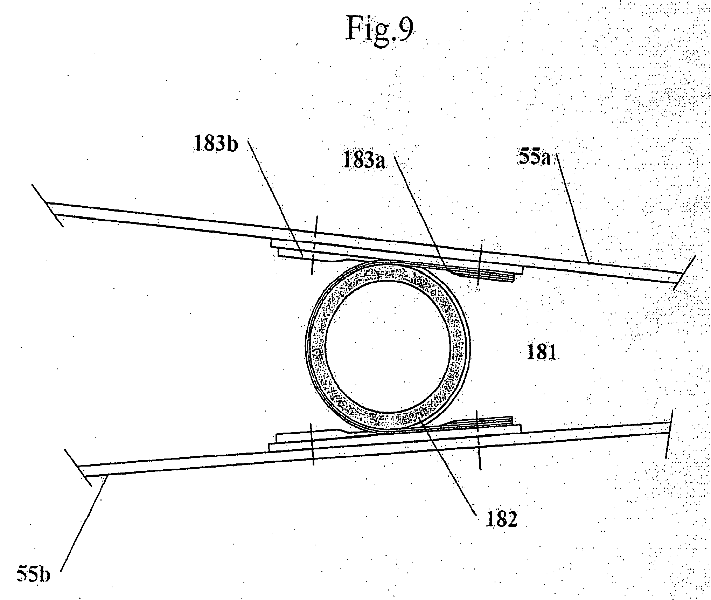

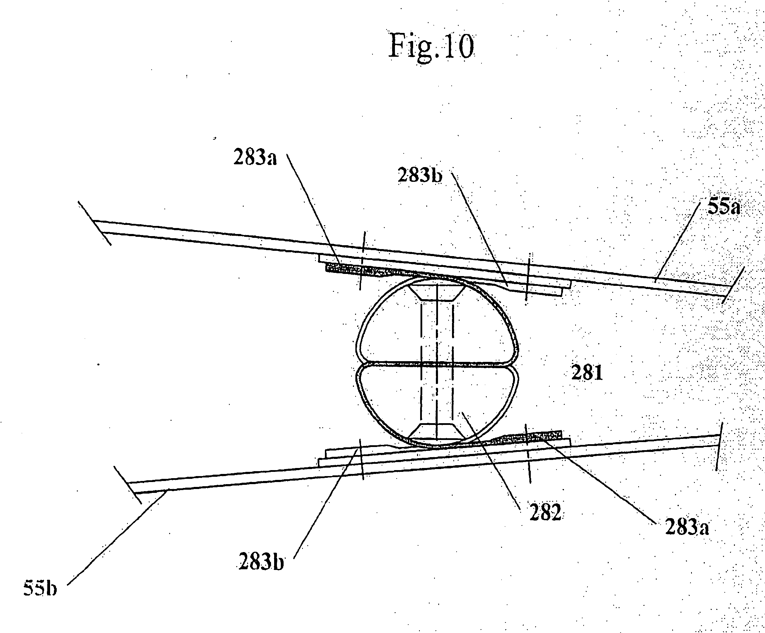

Die Figuren 9 und 10 zeigen Abstandshalter 181; 281, die zwischen der ersten Beplankung 55a und der zweiten Beplankung 55b vorgesehen sein können und durch die die Beplankungen 55a, 55b in einem vorgegebenen Abstand gehalten werden und gleichzeitig eine Relativbewegung zwischen diesen bei Veränderung des Flügelprofils ermöglicht wird. Diese Abstandshalter 181; 281 sind durch jeweils ein walzenförmiges Element 182; 282 und eine flexible Bandanordnung 183a, 183b; 283a, 283b zur Führung des walzenförmigen Elements 182; 282 im Sinne einer Rollbewegung desselben zwischen den Beplankungen 55a, 55b bei einer Relativbewegung zwischen diesen. Diese flexible Bandanordnung 183a, 183b; 283a, 283b enthält mindestens ein um das walzenförmige Element 182; 282 herumgeführtes und mit seinen Enden an der ersten Beplankung 55a bzw. der zweiten Beplankung 55b festgelegtes flexibles Band. Bei der in Figur 10 gezeigten Ausführungsform ist das walzenförmige Element 282 mittig geteilt und das flexible Band 283a, 283b ist unter Umkehrung des Wickelsinns durch die Mitte des walzenförmigen Elements 282 und verschiedensinnig jeweils halb um dieses herum geführt.

Die Drehposition und Lage der Hebelelemente 507; 507'; 507" und der an diese angekoppelten stangenförmigen Antriebselemente 509; 509'; 509" bestimmen die Lage der Antriebs- oder Verstellbereiche 163; 163'; 163" der Wirbelelemente 154; 154'; 154". Die Einstellung der Lage der zweiten Beplankung 55b relativ zur ersten Beplankung 55a kann durch eine Verbindung der stangenförmigen Antriebselemente 509; 509'; 509" mit der zweiten Beplankung 55b erfolgen. Die Einstellung der Lage der zweiten Beplankung 55b kann auch durch eine Verbindung derselben mit dem Antriebs- oder Verstellbereichen 163; 163'; 163" der Wirbelelemente 154; 154'; 154" erfolgen. Die Verbindung der zweiten Beplankung 55b mit den Wirbelelementen 154; 154'; 154" kann auch über Hebelelemente erfolgen. Insbesondere auch kann die zweite Beplankung 55b selbst aus den Antriebselementen 509; 509'; 509" gebildet sein, die dann flächig auszubilden wären, um im Zusammenwirken die Oberfläche der zweiten Beplankung 55b zu bilden.

In der Ausführungsform von Figur 5, 6 und 7 ist der Verstellmechanismus 160 mit Hebelelementen 507 und Antriebselementen 509 ausgebildet, wobei das Hebelelement 507 als Rolle oder Walze vorgesehen ist, die mittels eines an deren Außenseite angebrachten flexiblen Bandes 511 an der jeweiligen Beplankung und an der gegenüberliegenden Seite mittels einem an der Außenseite angebrachten flexiblen Band 512 an einem entsprechenden stangenförmigen Antriebselement 509 angekoppelt ist, vergleiche Figur 7. Die elastischen Bänder 511, 512 sind derart ausgebildet, daß diese zur Übertragung von Schubkräften geeignet sind. Weiterhin sind die Hebelelemente 507 mittels einer Drehachse 508 drehbar an dem Antriebs- oder Verstellbereich 163 der Wirbelelemente 154 gelagert. Beim Drehen der Hebelelemente 507 mittels der jeweils angeschlossenen Antriebselemente 509 werden die flexiblen Bänder 511, 512 teilweise auf- bzw. abgerollt, so daß die Position des jeweiligen Hebelelements 507 entlang der X-Richtung verschoben wird. An der Achse 508 des Hebelelements 507 ist das Ende des Antriebselements 509 gelagert, das dem mittels flexiblen Bändern gelagerte Ende gegenüberliegt. Wenn auf diese Weise jedes Antriebselement 509 jeweils zwei benachbarte Hebelelemente 507 verbindet, werden bei Betätigung des Verstellmechanismus 160 die Abstände zwischen den rollenförmigen Hebelelementen 507 auf vorbestimmte Weise verändert und gleichzeitig die Wirbelelemente 154 an der zweiten Beplankung 55b gehalten. Die Wirbelelemente 154 stehen einerseits direkt oder über die Gelenke 168, 169, 250 mit der ersten Beplankung 55a in Verbindung und sind andererseits über die Hebelelemente 507 an der zweiten Beplankung 55b gelagert. Auf diese Weise wird eine in Abhängigkeit von der Betätigung des Verstellmechanismus 160 vorbestimmte Krümmung der ersten Beplankung 55a und der zweiten Beplankung 55b eingestellt.

Die stangenförmigen Antriebselemente 509; 509'; 509" und optional auch die Hebeletemente 507; 507'; 507" können auch derart gestaltet sein, daß sie einzeln ansteuerbar sind, um die Krümmung der Beplankungen 55a, 55b zusätzlich bereichsweise zu ändern. Im ersten Fall sind die stangenförmigen Antriebselemente 509 selbst längenveränderlich ausgebildet.

Zum Ausgleichen einer Relativbewegung zwischen der ersten Beplankung 55a und dem Übertragungsbereich 164 der Wirbelelemente 154 können Pendelgelenke 168 vorgesehen sein, vergl. Figur 5 und 6, über die der Übertragungsbereich 164 der Wirbelelemente 154 mit der ersten Beplankung 55a gekoppelt ist. Die Pendelgelenke 168 können ebenso wie die Gelenkbereiche 169 zwischen zwei benachbarten Wirbelelementen 154 durch elastische Gelenkelemente gebildet sein, insbesondere durch biegeelastische Bänder 172, 174, vergleiche Figur 8. Auch können die Gelenkbereiche zwischen den benachbarten Wirbelelementen 154 und die Pendelgelenke durch ein gemeinsames Gelenk 200 gebildet sein. Das gemeinsame Gelenk 200 kann durch sich jeweils in Verlängerung der Schenkel 154a, 154b der dreieckigen Wirbelelemente 154 erstreckende, mit einer Seite an diesen festgelegte, einander kreuzende biegeelastische Bänder 172, 174 gebildet sein, deren andere Seite an der ersten Beplankung 55a festgelegt ist oder in diese übergeht. Die nahe dem Übertragungsbereich 164 der Wirbelelemente 154 gelegene erste Beplankung 55a ist mittels der Strukturgelenke 250 derart mit den Wirbelelementen 154 verbunden, daß eine Verschwenkung oder Verdrehung der Wirbelelemente 154 eine Verlauf- oder Krümmungsänderung der anliegenden ersten Beplankung 55a bewirkt.

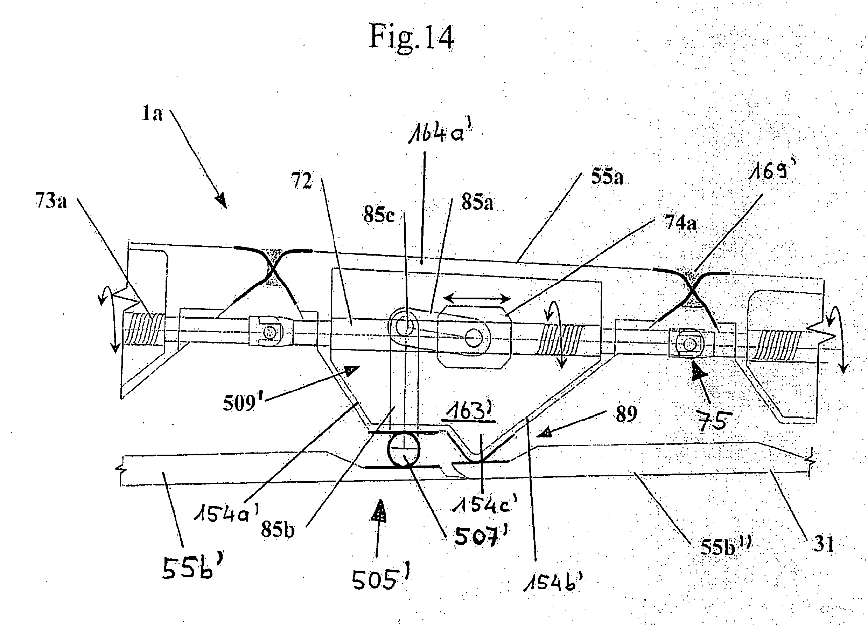

Bei dem in den Figuren 11 bis 15 dargestellten Ausführungsbeispiel umfaßt der zur Veränderung der Profilform des Tragflügels 1 vorgesehene Verstellmechanismus 160' wiederum eine Anzahl von kastenförmigen Wirbelelementen 154', die in einer senkrecht zur Zeichenebene ausgedehnten Richtung längsausgedehnt sind und an ihren Längsseiten aneinander anliegen und durch flexible Gelenkbereiche 169' miteinander verbunden sind, vergleiche Figur 14. Die Wirbelelemente 154' haben eine dreieckige Grundform mit einem Basiselement 164a', welches gleichzeitig einen Übertragungsbereich 164' und auch teilweise die erste Beplankung 55a bildet. Von dem Basiselement 164a' aus verlaufen ein erster Schenkel 154a' und ein zweiter Schenkel 154b' zu einer dem Basiselement 164a' gegenüberliegenden Spitze 154c'. Die Spitzen 154c' der Wirbelelemente 154' bilden Antriebs- oder Verstellbereiche 163', an welchen ein Verstellmechanismus 160' gekoppelt ist, der dazu dient, die Wirbelelemente 154' in Ansprache auf ein von außen zugeführtes entsprechendes Steuersignal im Sinne einer Veränderung des Flügelprofils zu verschwenken.

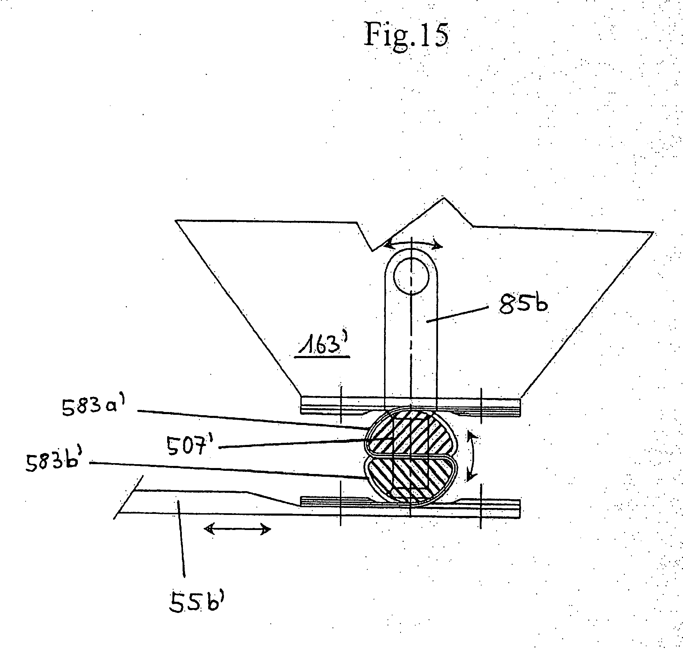

Der zur Verstellung des Flügelprofils vorgesehene Verstellmechanismus 160' ist durch eine Anzahl von Verstellelementen 505' gebildet, die jeweils aus einem Hebelelement 507' und einem Antriebselement 509' bestehen. Die Hebelelemente 507' sind durch walzenförmige Elemente gebildet, die an einer ersten Seite ihres Umfangs an einem Teil der zweiten Beplankung 55b anliegen und mit dieser gekoppelt sind und die an der anderen Seite ihres Umfangs an einem Teil des Verbindungsbereichs 163' des Wirbelelements 154' anliegen und mit diesen gekoppelt sind. Sowohl mit der zweiten Beplankung 55b als auch mit dem betreffenden Teil des Verbindungsbereichs 163' des Wirbelements 154' sind die walzenförmigen Hebelelemente 507' durch eine flexible Bandanordnung 583a', 583b' gekoppelt, durch die sie im Sinne einer Rollbewegung zwischen den besagten beiden Teilen geführt und gleichzeitig kraftschlüssig mit diesen gekoppelt sind, vergleiche Figur 15.

Das Antriebselement 509' umfaßt einen mit dem Hebelelement 507' drehfest verbundenen oder einstückig ausgebildeten Antriebshebel 85b, wobei eine Verschwenkung desselben eine Verdrehung oder eine Verschwenkung des Hebelelements 507' im Sinne einer Veränderung der gegenseitigen Lage des Antriebs- oder Verstellbereichs 163' des Wirbelelements 154' und der zweiten Beplankung 55b im Sinne einer Veränderung des Flügelprofils bewirkt. Der Antriebshebel 85b ist über einen Zwischenhebel 85a mit einer auf einer Drehspindel 72 gelagerten Schiebemutter 74a gekoppelt, wobei der Zwischenhebel 85a einerseits gelenkig mit dem Antriebshebel 85b und andererseits gelenkig mit der Schiebemutter 74a verbunden ist.

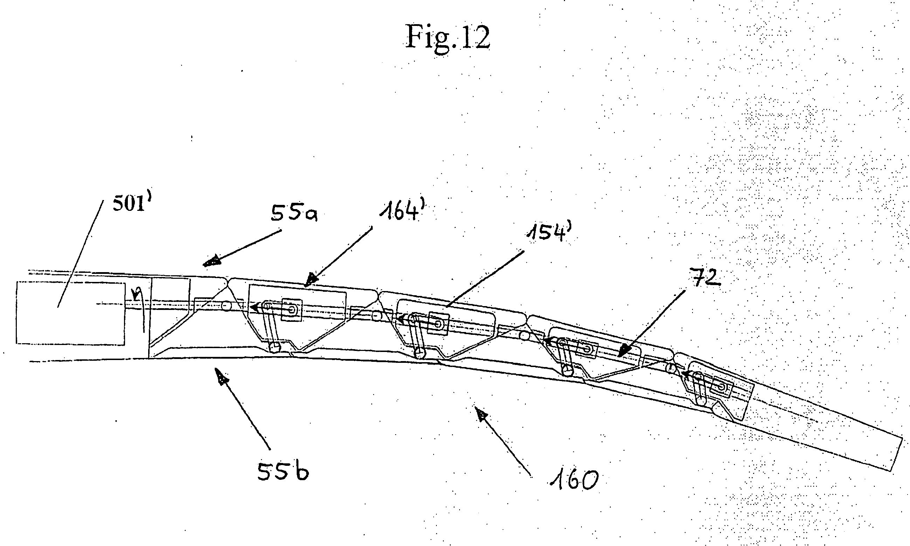

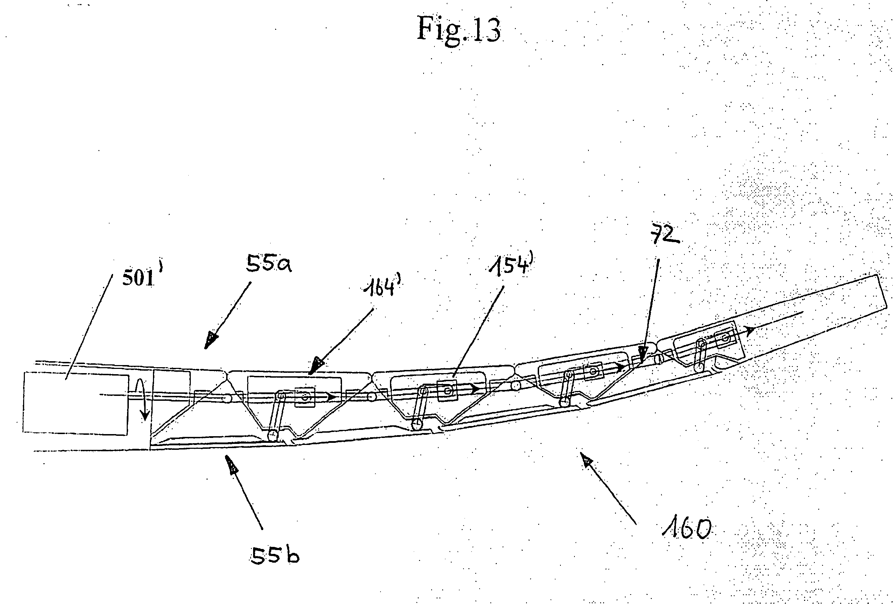

Die Drehspindel 72 ist quer zur Längsrichtung der Wirbelelemente 154' verlaufend angeordnet und zu ihrem Antrieb und damit zum Antrieb des Verstellmechanismus 160' mit einem Drehaktuator 501' gekoppelt Zwischen einzelnen Teilen der Drehspindel 72 sind kardanisch gelenkige Kopplungselemente 75', damit die Lage der Drehspindeln 72 an die Krümmung des Flügelprofils angepaßt werden kann. Beim Verdrehen der Drehspindeln 72 durch den Drehaktuator 501' erfolgt ein Verdrehen oder Verschwenken der Hebelelemente 507' über die das Antriebselement 509' bildenden Antriebshebel 85b und zwischen Hebel 85a, wodurch die Profilform aus der in Figur 11 gezeigten gestreckten Stellung in die in Figur 12 gezeigte nach unten gewölbte Stellung oder in die in Figur 13 gezeigte nach oben gewölbte Stellung gebracht werden kann.

Wie insbesondere aus Figur 14 ersichtlich ist, ist die zweite Beplankung 55b an zwei benachbarten Wirbelelementen 154' in einzelne Beplankungssegmente 55b', 55b" unterbrochen, die bei Veränderung der Form des Flügelprofils im Sinne eines Längenausgleichs zwischen der ersten Beplankung 55a und der zweiten Beplankung 55b gegeneinander verschiebbar sind.

Alternativ zu der in Figur 15 im Detail gezeigten Ausführungsform kann das Antriebselement 509' auch eine flexible Bandanordnung 584a', 584b' aufweisen, die zwischen einen mit dem Hebelelement 507' drehfest gekoppelten Antriebshebel 85b' und einer auf der Drehspindel 72' gelagerten Schiebemutter 74a' vorgesehen ist. Dabei ist die flexible Bandanordnung 584a', 584b' so ausgebildet, daß die Schiebemutter 74a' auf einem Radius um den Mittelpunkt des walzenförmigen Hebelelements 507' entlang der Drehspindel 72' verschiebbar ist.

Gemäß dem weiteren Ausführungsbeispiel, das in den Figuren 17a) und b) gezeigt und anhand eines im profilvariablen Flügelforderkantenbereichs, vergleiche Figuren 1 bis 3, verwirklicht ist, sind wiederum mehrere hintereinander angeordnete kastenförmige Wirbelelemente 154" vorgesehen, wie bei dem Ausführungsbeispiel der Figuren 11 bis'15, wobei jedoch deren Antriebshebel 85b jeweils mit einer Schubstange 76 gekoppelt sind, welche durch einen Schubaktuator 501" zwischen einer eingefahrenen Position, siehe Figur 17a), und einer ausgefahrenen Position, siehe Figur 17b) verschoben werden können. Dazu sind die einzelnen Schubstangen 76 jeweils über ein einfach gelenkiges Kopplungselement 75" miteinander bzw. mit dem Schubaktuator 501 " gekoppelt.

### Bezugszeichenliste

- 1: Flügel
- 3: Flügelkasten
- 5: Flügeltiefenrichtung
- 10: Spannweitenrichtung
- 11: Vorderkantenbereich, flexibler Bereich
- 12: Hinterkantenbereich, flexibler Bereich
- 14: Flügelspitzenbereich
- 15: flexibler Bereich
- 16: Profilschnitt
- 55a: erste Beplankung
- 55b: zweite Beplankung
- 72; 72': Drehspindel
- 74a, 74a': Schiebemutter
- 75: Kopplungselement
- 76: Schubstange
- 85a: Zwischenhebel
- 85b; 85b': Antriebshebel
- 154; 154'; 154": Wirbelelemente
- 154a ...: erster Schenkel
- 154b ...: zweiter Schenkel
- 154c ...: Spitze
- 154g ...: Gelenk
- 160; 160'; 160": Verstellmechanismus
- 163; 163'; 163": Antriebs- oder Verstellbereich
- 164; 164'; 164": Übertragungsbereich
- 164a ...: Basiselement
- 168: Pendelgelenk
- 169; 169'; 169": Gelenkbereich
- 170: Gelenkbereich
- 172: biegelastisches Band
- 174: biegelastisches Band
- 176: Füllstück
- 177: Steg- oder Holmelement
- 178: gelenkige Verbindung
- 179: gelenkige Verbindung
- 181: Abstandshalter
- 182: walzenförmiges Element
- 183a: flexible Bandanordnung
- 184b: flexible Bandanordnung
- 210: Drehgelenk
- 230: Pendelgelenk
- 250: Strukturgelenk
- 281: Abstandshalter
- 282: walzenförmiges Element
- 283a: flexible Bandanordnung
- 283b: flexible Bandanordnung
- 501; 501'; 501": Aktuator
- 501 a: Stellelement
- 505; 505'; 505": Verstellelement
- 507; 507'; 507": Hebelelement
- 508: Drehachse
- 509; 509'; 5092: Antriebselement
- 511: flexible Bandanordnung
- 512: flexible Bandanordnung
- 583a; 583a': flexible Bandanordnung
- 583b; 583b': flexible Bandanordnung
- 584a'; 584b': flexible Bandanordnung

## Patentansprüche

1. Flügel, insbesondere Tragflügel eines Flugzeugs, mit veränderbarem Profil, der sich in im wesentlichen in Strömungsrichtung verlaufender Flügeltiefenrichtung (5) und quer dazu in Spannweitenrichtung (10) erstreckt und eine erste Beplankung (55a) und eine zweite Beplankung (55b) aufweist, und mit einem flexiblen Bereich (11; 12; 15), durch den das Profil des Flügels (1) verstellbar ist, **dadurch gekennzeichnet, dass** der flexible Bereich (11; 12; 15) mehrere in einer Längsrichtung ausgedehnte Wirbelelemente (154; 154'; 154") umfasst, die an ihren Längsseiten in einem vorgegebenen Maß über Gelenkbereiche (169; 1.69'; 169") gelenkig verbunden und zwischen der ersten Beplankung (55a) und der zweiten Beplankung (55b) vorgesehen sind, wobei die Wirbelelemente (154; 154'; 154") einen quer zu ihrer Längsrichtung verlaufenden, mit der ersten Beplankung (55a) in Verbindung stehenden Übertragungsbereich (164; 164'; 164") und einen in Vertikalrichtung beabstandeten, mit einem Verstellmechanismus (505; 505'; 505") zum Bewegen der Wirbelelemente (154; 154'; 154") um die Gelenkbereiche (169; 169'; 169") gekoppelten Antriebs- oder Verstellbereich (163; 163'; 163") aufweisen, wobei der Verstellmechanismus (505; 505', 505") ein oder mehrere Hebelelemente (507; 507'; 507") enthält, die zwischen dem Antriebs- oder Verstellbereich (163; 163 ; 163") der Wirbelelemente (154; 154 ; 154") und der zweiten Beplankung (55b) gekoppelt und durch ein oder mehrere Antriebselemente (509; 509'; 509") unter damit einhergehender gegenseitiger Verschiebung von Antriebs- oder Verstellbereich (163; 163'; 163") und zweiter Beplankung (55b) im Sinne einer Veränderung des Flügelprofils in Ansprache auf ein von aussen zugeführtes entsprechendes Steuersignal verdrehbar oder verschwenkbar sind.

2. Flügel nach Anspruch 1, **dadurch gekennzeichnet, dass** die Hebelelemente (507; 507'; 507") an einer ersten Seite mit der zweiten Beplankung (55b) und an einer zweiten Seite oder an einer Drehachse (508) mit dem Antriebs- oder Verstellbereich (163; 163'; 163") des Wirbelelements (154; 154'; 154") gekoppelt sind, wobei eine Verdrehung oder Verschwenkung der Hebelelemente (507; 507'; 507") durch die Antriebselemente (509; 509'; 509") eine gegenseitige Verschiebung von Antriebs- oder Verstellbereich (163; 163'; 163") und zweiter Beplankung (55b) bewirkt.

3. Flügel nach Anspruch 2, **dadurch gekennzeichnet, dass** die Hebeielemente (507) an ihrer ersten Seite mit der zweiten Beplankung (55b) und an ihrer zweiten Seite mit dem Antriebselement (509) gekoppelt und mit ihrer dazwischen hegenden Drehachse (508) an dem Antriebs- oder Verstellbereich (163) des Wirbelelements (154) drehbar gelagert sind.

4. Flügel nach Anspruch 2 oder 3, **dadurch gekennzeichnet, dass** das Antriebselement (509; 509'; 509") durch eine in ihrer Länge und/oder in ihrer Lage veranderliche Antriebssehne gebildet ist, wobei eine Veränderung der Länge und/oder der Lage der Antriebssehne eine Verdrehung oder Verschwenkung des Hebelelements (507; 507'; 507") im Sinne einer Veränderung des Flügelprofils bewirkt.

5. Flügel nach Anspruch 4, **dadurch gekennzeichnet, dass** mehrere hintereinander angeordnete Wirbelelemente (154; 154'; 154") vorgesehen sind, die jeweils mit einem Antriebselement (509; 509'; 509") gekoppelt sind.

6. Flügel nach Anspruch 5, **dadurch gekennzeichnet, dass** ein im Sinne einer Weiterleitung der Antriebsbewegung zwischen zwei aufeinanderfolgenden Wirbelelementen (154) vorgesehenes Antriebselement (509) zwischen den Antriebs- oder Verstellbereich (163) des nachfolgenden Wirbelelements (154) und die zweite Seite des Hebelelements (507) des vorangehenden Wirbelelements (154) gekoppelt ist.

7. Flügel nach Anspruch 6, **dadurch gekennzeichnet, dass** ein in Antriebsrichtung erstes Wirbelelement (154; 154'; 154") mit einer Aktuatoreinrichtung (501; 501'; 501") gekoppelt ist, welche mit dem Hebelelement (507; 507'; 507") des ersten Wirbelelements (154; 154'; 154") oder direkt mit dem Antriebs- oder Verstellbereich (163) des ersten Wirbelelements (154) in Verbindung steht.

8. Flügel nach Anspruch 5, **dadurch gekennzeichnet, dass** ein zwischen zwei aufeinanderfolgenden Wirbelelementen (154) vorgesehenes Antriebselement (509) durch eine in Ansprache auf ein von außen zugeführtes Steuersignal in ihrer Lange veränderbare Aktuatoreinrichtung gebildet ist.

9. Flügel nach Anspruch 2, **dadurch gekennzeichnet, dass** die Hebelelemente (507'; 507") an einer ersten Seite mit der zweiten Beplankung (55b) und an einer zweiten Seite mit dem Antriebs- oder Verstellbereich (163'; 163") des Wirbelelements (154'; 154") gekoppelt sind.

10. Flügel nach Anspruch 9, **dadurch gekennzeichnet, dass** das Antriebselement (509'; 509") einen mit dem Hebelelement (507'; 507") drehfest verbundenen Antriebshebel (85b) umfasst, wobei eine Verschwenkung des Antriebhebels (85b) eine Verdrehung oder Verschwenkung des Hebelelements (507'; 507") im Sinne einer Veränderung des Flügelprofils bewirkt.

11. Flügel nach Anspruch 10, **dadurch gekennzeichnet, dass** der Antriebshebel (85b) zu seiner Verschwenkung mit einer Drehspindel (72) oder mit einer Schubstange (76) gekoppelt ist.

12. Flügel nach Anspruch 11, **dadurch gekennzeichnet, dass** die Drehspindel (72) oder die Schubstange (76) quer zur Längsrichtung der Wirbelelemente (154'; 154") verlaufend angeordnet und zu ihrem Antrieb mit einen Drehaktuator (501'; 501 ") gekoppelt ist.

13. Flügel nach Anspruch 11 oder 12, **dadurch gekennzeichnet, dass** mehrere hintereinander angeordnete Wirbelelemente (154'; 154") vorgesehen sind, deren Antriebshebel (85b) jeweils mit einer Drehspindel (72) oder einer Schubstange (76) gekoppelt sind, wobei die Drehspindeln (72) bzw. Schubstangen (76) der einzelnen Wirbelelemente (154'; 154") jeweils miteinander über ein kardanisch gelenkiges bzw. ein einfach gelenkiges Kopplungselement (75'; 75") miteinander bzw. mit einem zu ihrem Antrieb vorgesehenen Drehaktuator bzw. Schubaktuator (501';501 ") gekoppelt sind.

14. Flügel nach einem der Ansprüche 1 bis 13, **dadurch gekennzeichnet, dass** die Hebelelemente (507; 507'; 507") durch walzenförmige Elemente gebildet sind, die an einer Seite ihres Umfangs an einem Teil der zweiten Beplankung (55b) anliegen und an der anderen Seite ihres Umfangs an einem Teil des Antriebs- oder Verstellbereichs (163'; 163") des Wirbelelements (154'; 154") anliegen oder mit einem Antriebselement (509).gekoppelt sind.

15. Flügel nach Anspruch 14, **dadurch gekennzeichnet, dass** die walzenförmigen Elemente (507; 507'; 507") durch eine flexible Bandanordnung (583a, 583b; 583a', 583b') im Sinne einer Rollbewegung zwischen dem Teil der zweiten Beplankung (55b) und dem Teil des Antriebs- oder Verstellbereichs (163'; 163") des Wirbelelements (154'; 154") oder dem Antriebselement (509) geführt sind.

16. Flügel nach einem der Ansprüche 1 bis 15, **dadurch gekennzeichnet, dass** die zweite Beplankung (55b) an zwei benachbarten Wirbelelementen (154) ununterbrochen ausgebildet ist, und dass am Ende des flexiblen Bereichs (11; 12; 15) eine Vorrichtung zum Längenausgleich zwischen der ersten Beplankung (55a) und der zweiten Beplankung (55b) vorgesehen ist.

17. Flügel nach einem der Ansprüche 1 bis 15, **dadurch gekennzeichnet, dass** die zweite Beplankung (55b) an zwei benachbarten Wirbelelementen (154'; 154") in einzelne Beplankungssegmente (55b', 55b") unterbrochen ist, die bei Veränderung der Form des Flügelprofils im Sinne eines Längenausgleichs zwischen der ersten Beplankung (55a) und der zweiten Beplankung (55b) gegeneinander verschiebbar sind.

18. Flügel nach Anspruch 17, **dadurch gekennzeichnet, dass** ein erstes Beplankungssegment (55b') von zwei benachbarten Beplankungssegmenten (55b', 55b") mit der einen Seite des Hebelelements (507'; 507") eines Wirbelelements (554') gekoppelt ist, und dass das andere Beplankungssegment (55b") der zwei benachbarten Beplankungssegmente (55b', 55b") mit dem Antriebs- oder verstellbereich (163'; 163") des Wirbelelements (154', 154") gekoppelt ist, wobei eine Verdrehung oder Verschwenkung des Hebelelements (507'; 507") eine Veränderung der Form des Flügelprofils und eine Veränderung der gegenseitigen Lage der benachbarten Beplankungssegmente (55b', 55b") bewirkt.

19. Flügel nach einem der Ansprüche 11 bis 18, **dadurch gekennzeichnet, dass** zwischen dem Antriebshebel (85b) und einer auf der Drehspindel (72) gelagerten Schiebemutter (74a) ein Zwischenhebel (85a) angeordnet ist, der einerseits gelenkig mit dem Antriebshebel (85b) und andererseits gelenkig mit der Schiebemutter (74a) verbunden ist.

20. Flügel nach einem der Ansprüche 11 bis 18, **dadurch gekennzeichnet, dass** zwischen dem Antriebshebel (85b') und einer auf der Drehspindel (72') gelagerten Schiebemutter (74a') eine flexible Bandanordnung (584a', 584b') vorgesehen ist.

21. Flügel nach einem der Ansprüche 1 bis 20, **dadurch gekennzeichnet, dass** die Wirbelelemente (154; 154'; 154") im Querschnitt eine im wesentlichen dreieckige Grundform haben, wobei der Übertragungsbereich (164; 164'; 164") durch die Basislinie und der Antriebs- oder verstellbereich (163; 163'; 163") durch die dieser gegenüberliegende Spitze des Dreiecks gebildet sind.

22. Flügel nach einem der Ansprüche 1 bis 21, **dadurch gekennzeichnet, dass** zum Ausgleichen einer Relativbewegung zwischen der ersten Beplankung (55a) und dem Wirbelelement (154) dienende Pendelgelenke (168) vorgesehen sind, über die der Übertragungsbereich (164) der Wirbelelemente (154) mit der ersten Beplankung (55a) gekoppelt ist.

23. Flügel nach einem der Ansprüche 1 bis 22, **dadurch gekennzeichnet, dass** die Gelenkbereiche (169; 169') und/oder die Pendelgelenke (168) durch elastische Gelenke gebildet sind.

24. Flügel nach Anspruch 23, **dadurch gekennzeichnet; dass** die Gelenkbereiche (169; 169') und/oder die Pendelgelenke (168) durch biegeelastische Bänder (172; 174) gebildet sind.

25. Flügel nach Anspruch 22 oder 23, **dadurch gekennzeichnet, dass** die Gelenkbereiche und die Pendelgelenke durch ein gemeinsames Gelenk (200) gebildet sind.

26. Flügel nach Anspruch 25, **dadurch gekennzeichnet, dass** das gemeinsame Gelenk (200) durch sich jeweils in Verlängerung der Schenkel (154a', 154b') der dreieckigen Wirbelelemente (154') erstreckende, mit einer Seite an diesen festgelegte, einander kreuzende biegeelastische Bänder (172, 174) gebildet ist, deren andere Seite an der ersten Beplankung (55a) des Flügels (1) festgelegt ist oder in diese übergeht.

27. Flügel nach einem der Ansprüche 1 bis 26, **dadurch gekennzeichnet, dass** zwischen der ersten Beplankung (55a) und der zweiten Beplankung (55b) ein Abstandshalter (181; 281) vorgesehen ist, durch den die Beplankungen (55a, 55b) in einem vorgegebenen Abstand gehalten werden und gleichzeitig eine Relativbewegung zwischen diesen bei Veränderung des Flügelprofils ermöglicht ist.

28. Flügel nach Anspruch 27, **dadurch gekennzeichnet, dass** der Abstandshalter (181; 281) ein walzenförmiges Element (182; 282) und eine flexible Bandanordnung (183a, 183b; 283a, 283b) zur Führung des walzenförmigen Elements (182; 282) im Sinne einer Rollbewegung des walzenförmigen Elements (182; 282) zwischen der ersten Beplankung (55a) und der zweiten Beplankung (55b) bei einer Relativbewegung zwischen diesen enthält.

29. Flügel nach Anspruch 28, **dadurch gekennzeichnet, dass** die flexible Bandanordnung (183a, 183b; 283a, 283b) mindestens ein um das walzenförmige Element (182; 282) herumgeführtes und mit seinen Enden an der ersten bzw. der zweiten Beplankung (55a, 55b) festgelegtes flexibles Band enthält.

30. Flügel nach Anspruch 29, **dadurch gekennzeichnet, dass** das walzenförmige Element (282) mittig geteilt ist, und dass das flexible Band (283a, 283b) unter Umkehrung des Wickelsinns durch die Mitte des walzenförmigen Elements (282) und verschiedensinnig jeweils halb um dieses herum geführt ist.

## Claims

1. A wing, particularly an airfoil of an aircraft, having a changeable profile, which extends in the wing depth direction (5) running essentially in the flow direction and transversely thereto in the wingspan direction (10) and has a first planking (55a) and a second planking (55b), and having a flexible area (11; 12; 15), through which the profile of the wing (1) is adjustable, **characterized in that** the flexible area (11; 12; 15) comprises a multitude of vortex elements (154; 154'; 154") extended in the longitudinal direction, which are connected to one another in an articulated way on their longitudinal sides in a predefined dimension via joint areas (169; 169'; 169") and are provided between the first planking (55a) and the second planking (55b), the vortex elements (154; 154'; 154") having a transmission area, which runs transversely to their longitudinal direction and is connected to the first planking (55a), and a drive or adjustment area (163; 163'; 163"), which is at a distance in the vertical direction and is coupled to an adjustment mechanism (505; 505'; 505") for moving the vortex elements (154; 154'; 154") around the joint areas (169; 169'; 169"), the adjustment mechanism (505; 505'; 505") containing one or more lever elements (507; 507'; 507"), which are coupled between the drive or adjustment area (163; 163'; 163") of the vortex elements (154; 154'; 154") and the second planking (55b) and are rotatable or pivotable by one or more drive elements (509; 509'; 509") so as to mutually displace the drive or adjustment area (163; 163'; 163")and second planking (55b) to change the wing profile in response to a corresponding externally supplied control signal.

2. The wing of claim 1,
wherein the lever elements (507; 507'; 507")are coupled on a first side to the second planking (55b) and on the second side or on an axis of rotation (508) to the drive or adjustment area (163; 163'; 163") of the vortex element (154; 154'; 154"), a rotation or pivot of the lever element (507; 507'; 507") by the drive elements (509; 509'; 509") causing mutual displacement of drive or adjustment area (163; 163'; 163") and second planking (55b).

3. The wing of claim 2,
wherein the lever elements (507) are coupled on their first side to the second planking (55b) and on their second side to the drive element (509) and their axis of rotation (508) lying between these sides is mounted on the drive or adjustment area (163)of the vortex element (154) so it is rotatable.

4. The wing of claim 2 or 3,
wherein the drive element (509; 509'; 509") is formed by a drive cable, whose length and/or location are changeable, a change of the length and/or the location of the drive cable causing a rotation or pivot of the lever element (507; 507'; 507") to change the wing profile.

5. The wing of claim 4,
wherein multiple vortex elements (154; 154'; 154") positioned one behind another are provided, each of which is coupled to a drive element (509; 509'; 509").

6. The wing of claim 5,
wherein a drive element (509), which is provided between two sequential vortex elements (154) to relay the drive movement, is coupled between the drive or adjustment area (163) of the following vortex element (154) and the second side of the lever element (507) of the preceding vortex element (154).

7. The wing of claim 6,
wherein a first vortex element (154; 154'; 154") in the drive direction is coupled to an actuator device (501; 501'; 501"), which is connected to the lever element (507; 507'; 507") of the first vortex element (154; 154'; 154") or directly to the drive or adjustment area (163) of the first vortex element (154).

8. The wing of claim 5,
wherein a drive element (509) provided between two sequential vortex elements (154) is formed by an actuator device whose length is changeable in response to an externally supplied control signal.

9. The wing of claim 2,
wherein the lever elements (507'; 507")are coupled on a first side to the second planking (55b) and on the second side to the drive or adjustment area (163'; 163") of the vortex element (154'; 154").

10. The wing of claim 9,
wherein the drive element (509'; 509") comprises a drive lever connected to the lever element (507'; 507")so that they rotate together, a pivot of the drive lever (85b) causing a rotation or pivot of the lever element (507'; 507") to change the wing profile.

11. The wing of claim 10,
wherein the drive lever (85b) is coupled to a rotating spindle (72) or to a pushrod (76) for its pivoting.

12. The wing of claim 11,
wherein the rotating spindle (72) or the pushrod (76) is positioned running transversely to the longitudinal direction of the vortex elements (154'; 154") and is coupled to a rotating actuator (501'; 501") for its drive.

13. The wing of claim 11 or 12,
wherein multiple vortex elements (154'; 154") are provided position one behind another, whose drive levers (85b) are each coupled to a rotating spindle (72) or a pushrod (76), the rotating spindles (72) and/or pushrods (76) of the individual vortex elements (154'; 154")each being coupled to one another and/or to a rotating actuator and/or thrust actuator (501'; 501")provided for their drive via a cardan-joint and/or singly articulated coupling element (75'; 75").

14. The wing of one of claims 1 to 13,
wherein the lever elements (507; 507'; 507") are formed by roller-shaped elements, one side of whose circumference presses against a part of the second planking (55b) and the other side of whose circumference presses against a part of the drive or adjustment area (163'; 163")of the vortex element (154'; 154") or is coupled to a drive element (509).

15. The wing of claim 14,
wherein the roller-shaped elements (507; 507', 507") are guided by a flexible band arrangement (583a, 583b; 583a' 583b') to produce a rolling movement between the part of the second planking (55b) and the part of the drive or adjustment area (163'; 163") of the vortex element (154'; 154") or the drive element (509).

16. The wing of one of claims 1 through 15,
wherein the second planking (55b) is implemented as undivided at two neighboring vortex elements (154), and a device for length equalization between the first planking (55a) and the second planking (55b) is provided at the end of the flexible area (11, 12, 15).

17. The wing of one of claims 1 through 15,
wherein the second planking (55b) is divided at two neighboring vortex elements (154'; 154") into individual planking segments (55b'; 55b"), which are displaceable toward one another upon change of the shape of the wing profile to equalize length between the first planking (55a) and the second planking (55b).

18. The wing of claim 17,
wherein a first planking (55b) segment of two neighboring planking segments (55b'; 55b") is coupled to a side of the lever element (507'; 507") of a vortex element (554'), and the other planking segment (55b") of the two neighboring planking segments (55b'; 55b") is coupled to the drive or adjustment area (163'; 163") of the vortex element (154'; 154"), a rotation or pivot of the lever element (507'; 507")causing a change of the shape of the wing profile and a change of the mutual location of the neighboring planking segments (55b'; 55b").

19. The wing of one of claims 11 through 18,
wherein an intermediate lever (85a), which is connected in an articulated way to the drive lever (85b) and, in addition, in an articulated way to the sliding nut (74a), is positioned between the drive lever (85b) and a sliding nut (74a) mounted on the rotating spindle (72).

20. The wing of one of claims 11 through 18,
wherein a flexible band arrangement (584a'; 584b') is provided between the drive lever (85b')and a sliding nut (74a') mounted on the rotating spindle (72').

21. The wing of one of claims 1 through 20,
wherein the vortex elements (154; 154'; 154") have an essentially triangular basic shape in cross-section, the transmission area (164; 164'; 164") being formed by the baseline and the drive or adjustment area (163; 163'; 163") being formed by the tip of the triangle diametrically opposite thereto.

22. The wing of one of claims 1 through 21,
wherein pendulum joints (168) are provided for equalizing a relative movement between the first planking (55a) and the vortex element (154), via which the transmission area (164) of the vortex elements (154) is coupled to the first planking (55a).

23. The wing of one of claims 1 through 22,
wherein the joint areas (169; 169') and/or the pendulum joints (168) are formed by elastic joints.

24. The wing of claim 23,
wherein the joint areas (169, 169') and/or the pendulum joints (168) are formed by bands having bending elasticity (172, 174).

25. The wing of claim 22 or 23,
wherein the joint areas and the pendulum joints are formed by a shared joint (200).

26. The wing of claim 25,
wherein the shared joint (200) is formed by bands having bending elasticity (172; 174), each of which extends in an extension of the legs (154a'; 154b') of the triangular vortex elements (154'), has one side fixed thereon, and intersect one another, and whose other side is fixed on the first planking (55a) of the wing (1) or passes into it.

27. The wing of one of claims 1 through 26,
wherein a spacer is provided between the first planking (55a) and the second planking (55b), through which the plankings (55a, 55b) are held at a predefined distance (181, 281) and a relative movement between the two is simultaneously made possible upon change of the wing profile.

28. The wing of claim 27,
wherein the spacer (181, 281) contains a roller-shaped element (182; 282) and a flexible band arrangement (183a, 183b, 283a, 283b) for guiding the roller-shaped element (182, 282) to perform a rolling movement of the roller-shaped element (182; 282) between the first planking (55a) and the second planking (55b) upon a relative movement between them.

29. The wing of claim 28,
wherein the flexible band arrangement (183a, 183b, 283a, 283b) contains at least one flexible band guided around the roller-shaped element (182, 282) and having its ends fixed on the first and/or the second planking (55a, 55b).

30. The wing of claim 29,
wherein the roller-shaped element (282) is divided in the middle, and the flexible band (283a, 283b) is guided through the middle of the roller-shaped (282) element and in different directions around each half of it while reversing the direction of winding.

## Revendications

1. Aile, en particulier voilure d'un avion, avec un profil variable qui s'étend dans la direction de profondeur d'aile (5), située essentiellement dans le sens d'écoulement, et transversalement à cette dernière dans la direction d'envergure (10), et présente un premier revêtement (55a) et un second revêtement (55b), et avec une zone flexible (11 ; 12 ; 15), par laquelle le profil de l'aile (1) est ajustable, **caractérisée en ce que** la zone flexible (11 ; 12 ; 15) comprend plusieurs éléments tourbillonnaires (154 ; 154' ; 154") étirés dans la direction longitudinale, qui s'articulent sur leurs côtés longitudinaux, dans une mesure prédéfinie, par l'intermédiaire de zones d'articulation (169 ; 169' ; 169") et sont prévus entre le premier revêtement (55a) et le second revêtement (55b), les éléments tourbillonnaires (154 ; 154' ; 154") présentant une zone de transmission (164 ; 164' ; 164"), qui s'étend transversalement à leur direction longitudinale et est en liaison avec le premier revêtement (55a), et une zone d'entraînement ou d'ajustage (163 ; 163' ; 163"), distante dans la direction verticale et couplée à un mécanisme de réglage (505 ; 505' ; 505") pour le déplacement des éléments tourbillonnaires (154 ; 154' ; 154") autour des zones d'articulation (169 ; 169' ; 169"), le mécanisme de réglage (505 ; 505' ; 505") comportant un ou plusieurs éléments de levier (507 ; 507' ; 507"), qui sont couplés entre la zone d'entraînement ou d'ajustage (163 ; 163' ; 163") des éléments tourbillonnaires (154 ; 154' ; 154") et le second revêtement (55b) et peuvent être animés d'un mouvement de rotation ou de pivotement par un ou plusieurs éléments d'entraînement (509 ; 509' ; 509"), en réponse à un signal de commande approprié envoyé de l'extérieur, avec un déplacement mutuel consécutif de la zone d'entraînement ou d'ajustage (163, 163' ; 163") et du second revêtement (55b), dans le sens d'une modification du profil d'aile.

2. Aile suivant la revendication 1, **caractérisée en ce que** les éléments de levier (507 ; 507' ; 507") sont couplés sur un premier côté au second revêtement (55b) et sur un second côté ou sur un axe de rotation (508) à la zone d'entraînement ou d'ajustage (163 ; 163' ; 163") de l'élément tourbillonnaire (154 ; 154' ; 154"), une rotation ou un pivotement des éléments de levier (507 ; 507' ; 507") par les éléments d'entraînement (509 ; 509' ; 509") provoquant un déplacement mutuel de la zone d'entraînement ou d'ajustage (163 ; 163' ; 163") et du second revêtement (55b).

3. Aile suivant la revendication 2, **caractérisée en ce que** les éléments de levier (507) sont couplés sur leur premier côté au second revêtement (55b) et sur leur second côté à l'élément d'entraînement (509) et sont montés tournants par leur axe de rotation intercalaire (508) sur la zone d'entraînement ou d'ajustage (163) de l'élément tourbillonnaire (154).

4. Aile suivant la revendication 2 ou 3, **caractérisée en ce que** l'élément d'entraînement (509 ; 509' ; 509") est formé par une corde modifiable dans sa longueur et/ou dans sa position, une modification de la longueur et/ou de la position de la corde d'entraînement provoquant une rotation ou un pivotement de l'élément de levier (507 ; 507' ; 507") dans le sens d'une modification du profil d'aile.

5. Aile suivant la revendication 4, **caractérisée en ce que** sont prévus plusieurs éléments tourbillonnaires (154 ; 154' ; 154") disposés les uns derrière les autres et couplés chacun à un élément d'entraînement (509 ; 509' ; 509").

6. Aile suivant la revendication 5, **caractérisée en ce qu'**un élément d'entraînement (509), prévu dans le sens d'une transmission du mouvement entre deux éléments tourbillonnaires successifs (154), est couplé entre la zone d'entraînement ou d'ajustage (163) de l'élément tourbillonnaire suivant (154) et le second côté de l'élément de levier (507) de l'élément tourbillonnaire précédent (154).

7. Aile suivant la revendication 6, **caractérisée en ce qu'**un premier élément tourbillonnaire (154 ; 154' ; 154") dans la direction d'entraînement est couplé à un actionneur (501 ; 501' ; 501 "), qui est relié à l'élément de levier (507 ; 507' ; 507") du premier élément tourbillonnaire (154 ; 154' ; 154") ou directement à la zone d'entraînement ou d'ajustage (163) du premier élément tourbillonnaire (154).

8. Aile suivant la revendication 5, **caractérisée en ce qu'**un élément d'entraînement (509), prévu entre deux éléments tourbillonnaires successifs (154), est formé par un actionneur modifiable dans sa longueur en réponse à un signal de commande envoyé de l'extérieur.

9. Aile suivant la revendication 2, **caractérisée en ce que** les éléments de levier (507' ; 507") sont couplés sur un premier côté au second revêtement (55b) et sur un second côté à la zone d'entraînement ou d'ajustage (163' ; 163") de l'élément tourbillonnaire (154' ; 154").

10. Aile suivant la revendication 9, **caractérisée en ce que** l'élément d'entraînement (509' ; 509") comprend un levier de commande (85b) solidaire de l'élément de levier (507' ; 507"), un pivotement du levier de commande (85b) provoquant une rotation ou un pivotement de l'élément de levier (507' ; 507") dans le sens d'une modification du profil d'aile.

11. Aile suivant la revendication 10, **caractérisée en ce que** le levier de commande (85b) est couplé pour son pivotement à une broche tournante (72) ou à une bielle (76).

12. Aile suivant la revendication 11, **caractérisée en ce que** la broche tournante (72) ou la bielle (76) est disposée transversalement à la direction longitudinale des éléments tourbillonnaires (154' ; 154") et est couplée pour son entraînement à un actionneur de rotation (501' ; 501 ").

13. Aile suivant la revendication 11 ou 12, **caractérisée en ce que** sont prévus plusieurs éléments tourbillonnaires (154' ; 154") disposés les uns derrière les autres, dont les leviers de commande (85b) sont couplés chacun à une broche tournante (72) ou à une bielle (76), les broches tournantes (72) et/ou bielles (76) des éléments tourbillonnaires individuels (154' ; 154") étant couplées respectivement entre elles par l'intermédiaire d'un élément d'accouplement à cardan et/ou à simple articulation (75' ; 75") et/ou à un actionneur de rotation et/ou actionneur de poussée (501' ; 501") prévu pour leur entraînement.

14. Aile suivant l'une des revendications 1 à 13, **caractérisée en ce que** les éléments de levier (507 ; 507' ; 507") sont formés par des éléments en forme de cylindres, qui s'appliquent sur un côté de leur pourtour sur une partie du second revêtement (55b) et sur l'autre côté de leur pourtour sur une partie de la zone d'entraînement ou d'ajustage (163' ; 163") de l'élément tourbillonnaire (154' ; 154") ou sont couplés à un élément d'entraînement (509).

15. Aile suivant la revendication 14, **caractérisée en ce que** les éléments en forme de cylindres (507 ; 507' ; 507") sont guidés par un agencement de bande flexible (583a, 583b ; 583a', 583b') dans le sens d'un mouvement de roulis entre la partie du second revêtement (55b) et la partie de la zone d'entraînement ou d'ajustage (163' ; 163") de l'élément tourbillonnaire (154' ; 154") ou l'élément d'entraînement (509).

16. Aile suivant l'une des revendications 1 à 15, **caractérisée en ce que** le second revêtement (55b) a une réalisation continue sur deux éléments tourbillonnaires limitrophes (154), et qu'un dispositif pour la compensation de longueur entre le premier revêtement (55a) et le second revêtement (55b) est prévu à l'extrémité de la zone flexible (11 ; 12 ; 15).

17. Aile suivant l'une des revendications 1 à 15, **caractérisée en ce que** le second revêtement (55b) est interrompu sur deux éléments tourbillonnaires limitrophes (154' ; 154") en segments de revêtement individuels (55b', 55b"), lesquels sont mutuellement déplaçables, lors de la modification de la forme du profil d'aile, dans le sens d'une compensation de longueur entre le premier revêtement (55a) et le second revêtement (55b).

18. Aile suivant la revendication 17, **caractérisée en ce qu'**un premier segment de revêtement (55b') de deux segments de revêtement limitrophes (55b', 55b") est couplé à l'un des côtés de l'élément de levier (507' ; 507") d'un élément tourbillonnaire (554'), et que l'autre segment de revêtement (55") des deux segments de revêtement limitrophes (55', 55b") est couplé à la zone d'entraînement ou d'ajustage (163' ; 163") de l'élément tourbillonnaire (154' ; 154"), une rotation ou un pivotement de l'élément de levier (507' ; 507") provoquant une modification de la forme du profil d'aile et une modification de la position mutuelle des segments de revêtement (55b' ; 55b") limitrophes.

19. Aile suivant l'une des revendications 11 à 18, **caractérisée en ce qu'**un levier intermédiaire (85a) est disposé entre le levier de commande (85b) et un écrou de poussée (74a) monté sur la broche tournante (72), lequel levier intermédiaire s'articule d'un côté avec le levier de commande (85b) et de l'autre côté avec l'écrou de poussée (74a).

20. Aile suivant l'une des revendications 11 à 18, **caractérisée en ce qu'**un agencement de bande flexible (584a', 584b') est prévu entre le levier de commande (85b') et un écrou de poussée (74a') monté sur la broche tournante (72').

21. Aile suivant l'une des revendications 1 à 20, **caractérisée en ce que** les éléments tourbillonnaires (154 ; 154' ; 154") ont en coupe transversale une forme de base essentiellement triangulaire, la zone de transmission (164 ; 164' ; 164") étant formée par la ligne de base et la zone d'entraînement ou d'ajustage (163 ; 163' ; 163") étant formée par la pointe du triangle en vis-à-vis de cette ligne.

22. Aile suivant l'une des revendications 1 à 21, **caractérisée en ce que** sont prévues des articulations pendulaires (168) servant à compenser un mouvement relatif entre le premier revêtement (55a) et l'élément tourbillonnaire (154), articulations par l'intermédiaire desquelles la zone de transmission (164) des éléments tourbillonnaires (154) est couplée au premier revêtement (55a).

23. Aile suivant l'une des revendications 1 à 22, **caractérisée en ce que** les zones d'articulation (169 ; 169') et/ou les articulations pendulaires (168) sont formées par des articulations élastiques.

24. Aile suivant la revendication 23, **caractérisée en ce que** les zones d'articulation (169 ; 169') et/ou les articulations pendulaires (168) sont formées par des bandes flexibles élastiques (172 ; 174).

25. Aile suivant la revendication 22 ou 23, **caractérisée en ce que** les zones d'articulation et les articulations pendulaires sont formées par une articulation commune (200).

26. Aile suivant la revendication 25, **caractérisée en ce que** l'articulation commune (200) est formée par des bandes flexibles élastiques (172, 174), qui s'étendent chacune dans le prolongement des côtés latéraux (154a' , 154b') des éléments tourbillonnaires (154') triangulaires, sont fixées sur ces derniers par un côté et se croisent l'une l'autre, bandes dont l'autre côté est fixé sur le premier revêtement (55a) de l'aile (1) ou se prolonge par ce dernier.

27. Aile suivant l'une des revendications 1 à 26, **caractérisée en ce qu'**un écarteur (181 ; 281) est prévu entre le premier revêtement (55a) et le second revêtement (55b), écarteur par lequel les revêtements (55a, 55b) sont maintenus à une distance prédéfinie et qui permet simultanément un mouvement relatif entre ces derniers lors d'une modification du profil d'aile.

28. Aile suivant la revendication 27, **caractérisée en ce que** l'écarteur (181 ; 281) comporte un élément en forme de cylindre (182 ; 282) et un agencement de bande flexible (183a, 183b ; 283a, 283b) pour le guidage de l'élément cylindrique (182 ; 282) dans le sens d'un mouvement de roulis de l'élément (182 ; 282) entre le premier revêtement (55a) et le second revêtement (55b) lors d'un mouvement relatif entre ces derniers.

29. Aile suivant la revendication 28, **caractérisée en ce que** l'agencement de bande flexible (183a, 183b ; 283a, 283b) comporte au moins une bande flexible guidée autour de l'élément en forme de cylindre (182 ; 282) et fixée par ses extrémités sur le premier et/ou sur le second revêtement (55a, 55b).

30. Aile suivant la revendication 29, **caractérisée en ce que** l'élément en forme de cylindre (282) est partagé en son centre, et que chaque bande flexible (283a, 283b) est guidée, avec inversion du sens d'enroulement, au travers du centre de l'élément en forme de cylindre (282) et à moitié autour de ce dernier en sens différent.
